# EUROPEAN PATENT SPECIFICATION

(11) **EP 0 472 018 B1**
(45) Date of publication and mention of the grant of the patent: **17.04.1996**
(21) Application number: 91112885.8
(22) Date of filing: 31.07.1991
(51) Int. Cl.: H04B 7/204

(54) **Switchable on-board communication payload for multi-band and multi-beam applications**
Bordseitige Nutzlast zur Kommunikation, schaltbar für Mehrfachband- und Mehrstrahlanwendungen
Charge utile embarquée commutable de télécommunication pour applications pluri-bandes et pluri-faisceaux

(30) Priority: 31.07.1990 US 560672
(43) Date of publication of application: 26.02.1992
(73) Proprietor: INTERNATIONAL TELECOMMUNICATIONS SATELLITE ORGANIZATION, Washington, D.C. 20008 (US)
(72) Inventor: Lo, Gerald J., Bethesda, Maryland 20817 (US); Phiel, John F., Arnold, Maryland 21012 (US); Shimbo, Osamu, Bethesda, Maryland 20817 (US)
(74) Representative: Lehn, Werner, Dipl.-Ing.

(56) References cited:
- EP-A- 0 306 918
- IEEE INTERNATIONAL CONFERENCE ON COMMUNICATIONS vol. 1/3, 12 June 1988, PHILADELPHIA,US pages 526 - 531; F.ANANASSO ET AL: 'Non-Regenerative On-Board Processing for Multi-Beam Mobile Satellite Systems'
- TECHNICAL DIGEST - WESTERN ELECTRIC. no. 66, April 1982, NEW YORK US pages 29 - 30; E.A.NUSSBAUMER: 'Frequency Hopped,Time Division Multiple Access Satellite Communication System'

## Description

### Field of the Invention

The present invention relates to the interconnections between signals received and to be re-transmitted by a satellite. More specifically, the invention relates to a switching system in satellite communications enabling complete band-to-band and beam-to-beam connectivity involving signals of a variety of transmission bands available for satellite applications. The invention is also applicable to other wireless communications systems, such as microwave cellular radio applications.

### BACKGROUND OF THE INVENTION

When geo-stationary satellites were first introduced for telecommunication purposes, a satellite antenna beam covered the entire visible surface of the earth. Thus, any earth station could communicate with any other earth station as long as the two earth stations were visible simultaneously from the geo-stationary satellite. The International Radio Regulations of the International Telecommunication Union (ITU) provide for the allocation of radio frequencies of all radio services including the specific frequency bands for satellite communications. These bands are usually allocated in segments of about 250 MHz, 500 MHz or sometimes 1000 MHz. As the demand for satellite capacity increases, these allocated bands need to be re-used several times for each satellite orbital location. One way of re-using the allocated bands is to cover the visible surface of the earth not by a single antenna beam, but by a number of spot or zone beams that are mutually isolated. Each of these spot beams can reuse the allocated bandwidth once (or twice if orthogonal polarizations are used).

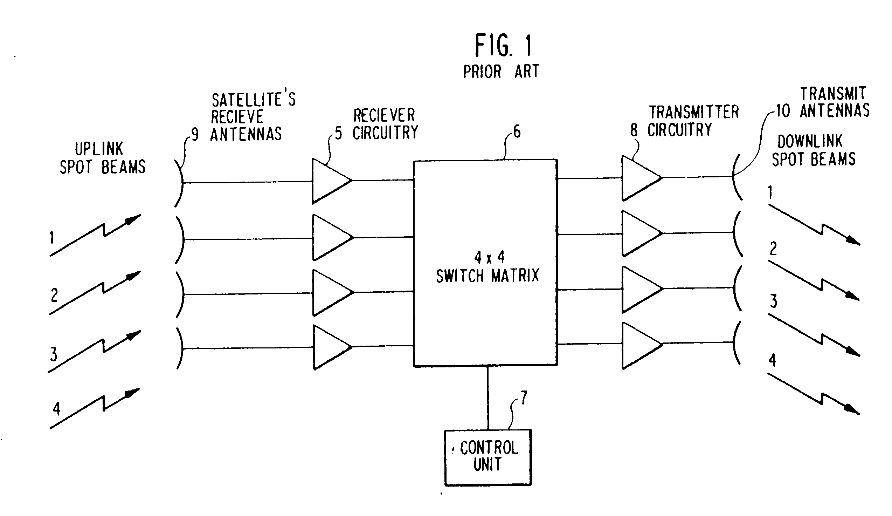

The need for on-board satellite switching began when multiple spot beam (or zone beam) satellites were deployed to reuse the allocated frequency spectrum. With multiple spot beams, flexibility in beam-to-beam connectivity must be maintained in order for an earth station covered by one satellite beam to be able to communicate with another earth station covered by another beam. For example, if four spot beams were used to re-use the available spectrum four times, a 4x4 switch matrix would be required to provide complete operational flexibility in connectivities, a switching matrix as shown in Figure 1 would be required.

As shown in Figure 1, four separate uplink spot beams are received by a satellite's receive antennas 9 and receiver circuitry 5 and are input to a four-by-four switch matrix 6. At the switch matrix 6, each received spot beam is directed towards a particular switch matrix output terminal based on control signals from control unit 7 to thus create transmission links through the switch matrix. The switch matrix outputs are next sent to the satellite's transmitter circuitry 8 and to the transmit antennas 10 which send downlink spot beams to a designated earth station depending on the configuration of the satellite's switch matrix 6 described above. In this way, for example, information contained in uplink spot beam 1 may be communicated to downlink spot beam 4 by causing the switch matrix 6 to temporarily hardwire a connection between its top-most input terminal and its bottom-most output terminal.

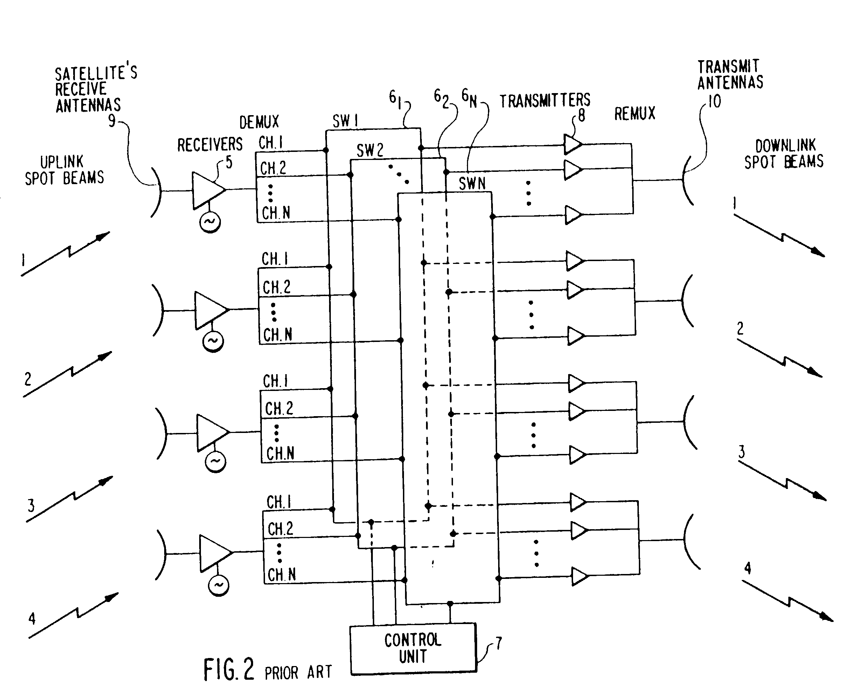

For reasons of efficiency, all communication satellites subdivide the allocated bands into narrow band channels, or transponders as they are commonly called, because of the frequency translation between the uplinks and the downlinks for each of the channels. As an example, if 500 MHz is available as an allocated band's bandwidth and the band is sub-divided into six 80 MHz channels (with guard bands), then six 4x4 switch matrices, i.e., one for each channel, will be required. Figure 2 shows how channel-by-channel matrix switching might be accomplished between four spot beams.

In Figure 2, an allocated transmission band has been divided into N channels. Figure 2 closely resembles Figure 1, except that, in Figure 2, N matrix switch units (6₁ through 6_{N}) are provided in order to switch signals of one uplink beam transmitted to the satellite using a particular channel, to a differently numbered downlink beam using the same particular channel. In general, matrix switching must occur between signals of the same frequency. Thus, if a band is divided into N channels, then N matrix switches are needed in order to maintain complete flexibility in switching between a channel of any uplink beam and that same channel of any downlink beam.

The terms "beam", "band", and "channel" will be used repeatedly in the following disclosure. It is to be noted that antenna beams are spatial entities that relate to the satellite antenna coverages or footprints on the earth's surface. "Band" refers to an allocated segment of the frequency spectrum for satellite communications and therefore it is an entity in the frequency domain. "Channel" is a sub-unit of a band, i.e., a band is usually divided up into a number of small contiguous frequency segments called channels. A number of frequency contiguous channels would therefore constitute a band. Nearly all existing earth stations are capable of communicating within all the channels in a given band. For economic reasons and technical complexity, it is not common practice for one earth station to operate in more than one band at a time. Thus, for satellites that have multiple spot beams and multi-band payloads, beam to beam connectivity is an extremely important capability in order that all the earth stations operating in different beams and in different bands be able to communicate with each other.

In the early satellites that used multiple spot beams, only "static" switch matrices were used. Here, "static" implies that the switches can be conveniently reconfigured on an occasional basis. Once reconfigured, the switches are left in the "static" state for long periods of time (months or years).

A single 4x4 static switch matrix can only provide four distinct connection paths at any given time. Using the example of four spot beams, there are 16 possible paths between the four uplink spot beams and the four downlink spot beams counting self-connection within one beam as a possible path. Thus, four (4) channels, each with a 4x4 switch matrix, will be required to provide complete connectivity to all of the four spot beams at all times. This arrangement can lead to inefficiencies as the traffic loadings of all the paths are not equal. Thus, some of the paths can be saturated, while some other paths remain lightly loaded. Since the capacity for each path is committed one channel at a time by switching, this arrangement is an inefficient utilization of the capacity of the satellite.

By the late 1960's, the concept of Time Division Multiple Access (TDMA) was established and experimentally verified. This concept allows burst mode operation, i.e., the traffic information arrives at the satellite in non-colliding time bursts rather than in a continuous sequence. Based on this TDMA format, there will be short periods of time (guard time) between bursts when there is no traffic going through the satellite. If the switch matrices are designed to switch or reconfigure quickly within these short durations when no traffic is present, a higher level of connectivity can be achieved within a single switch matrix of a single channel. This leads to better utilization efficiency of the channels. This concept of satellite switched TDMA or SSTDMA was first described in the late 1960's (W.G. Schmidt: "An on-board switched multiple-access system for millimeter-wave satellites," The First Digital Satellite Communication Conference, London, 1969; T. Muratani: "Satellite-Switched Time-Domain Multiple Access," EASCON, Oct. 1974, Washington, D.C.), and it has been implemented on the current TDRSS satellite and the INTELSAT VI satellites.

A number of papers were published in the 1970's and the early 1980's on the switch matrix technology for SSTDMA applications, (for example, "Future outlook for satellite-switched TDMA system", Muratani, T. et al; International Astronautical Federation, 28th International Astronautical Congress, Prague, Czechoslovakia, Sept. 25-Oct. 1, 1977; "Wideband, High Speed Switch Matrix Development for SS-TDMA Applications", Prather, W. H. et al, International Conference on Communications, Denver, CO, June 14-18, 1981, Conference Record, Volume 1. "A High Capacity Satellite Switched TDMA Microwave Switch Matrix", Cory, B.J. et al; National Telecommunications Conference, New Orleans, LA, November 29-December 3, 1981, Record, Volume 3. "Dynamic Switch Matrix for the TDMA Satellite Switching System", Ho, P.T. et al; 9th Communications Satellite Systems Conference, San Diego, CA. March 7-11, 1982, Collection of Technical Papers. "High-Speed Wide Band 20 x 20 Microwave Switch Matrix", Coban, E. et al, International Conference on Communications, Boston, MA, June 19-22, 1983, Conference Record, Volume 1). Generally, the matrix switching technologies use RF (radio frequency) switching techniques, whereby the actual switching is done at microwave frequencies, i.e., at the frequencies where the satellite either transmits or receives its signals from earth stations. The RF switch matrix can provide a broadcast mode, i.e, a one-to-n type of connection, in addition to a one-to-one type of connection. This feature is utilized for the distribution of reference bursts in conventional SSTDMA systems. The Muratani et al publication mentioned above discussed the possibility of beam combining using an RF switch matrix, although not required for SSTDMA applications. Some studies show that the switching could be more easily carried out at other (usually lower) frequencies. For these switches, frequency up and down conversion for the signals would be necessary. There are also proposals to perform the switching in "baseband", wherein the signals are demodulated back to their original formats and the switching is performed at that level rather than at RF. (See, e.g., U.S. Patent No. 4,425,639 to Acampora et al). Studies have also concluded that a large switch matrix (100x100) is feasible.

By the early 1980's, the frequency domain equivalent to SSTDMA, i.e., Satellite Switched Frequency Division Multiple Access (SSFDMA), was proposed ("Direct Access Satellite Communications Using SS-FDMA", Kiesling, J.D.; 8th Communications Satellite Systems Conference, Orlando, Fla., April 20-24, 1980, Technical Papers). The concept of SSFDMA was developed along the same lines as SSTDMA, i.e., to provide complete connectivity in a multi-beam satellite without sacrificing efficiency. While the SSTDMA switch matrix operates in real time by switching rapidly during the guard periods between the traffic bursts, the SSFDMA switch matrix remains in the "static" mode. Complete connectivity between different users of the satellite in different beams is achieved by sub-dividing one channel into even smaller equal segments of bandwidth called sub-channels and converting each subchannel to a common frequency (usually a lower intermediate frequency) so that static matrix switching can now be performed. Since a channel is thus sub-divided into many small sub-channels, complete connectivity between all the beams can be provided within one channel, thereby committing only the necessary capacity for each of the paths between the beams. Thus SSFDMA achieves the same objectives as SSTDMA in the frequency domain rather than in the time domain.

During the 1980's, refinements were made to both the SSTDMA and SSFDMA concepts ("SS/FDMA System for Digital Transmission - Application of Bandwidth-Variable SAW Filter Matrix for Efficient Interbeam Connection in Multibeam Satellites", Shinonaga, H. et al; ICDSC-7; Proceedings of the Seventh International Conference on Digital Satellite Communications, Munich, West Germany, May 12-16, 1986; "Non-Regenerative Satellite Switched FDMA (SS/FDMA) Payload Technologies", De Santis et al, International Journal of Satellite Communications (ISSN 0737-2884), Vol. 5; "System and Hardware Aspects in Advanced SS-FDMA Satellite Systems", Ananasso et al, AIAA International Communication Satellite systems Conference, 12th, Arlington, VA, Mar. 13-17, 1988; U.S. Patent 4,858,225). Mixed operation of SSTDMA and SSFDMA with SSTDMA operating at a fixed bit rate and SSFDMA with variable bit rates, i.e., variable sub-channel bandwidth was proposed by Shinonoga et al. DeSantis et al. and Ananasso addressed the technologies required to bring SSFDMA into practice, since mass and power consumption of the SSFDMA hardware could have limited the usefulness of the technique. The U.S. patent referenced above introduced the concept of variable bit rate SSTDMA in addition to variable bandwidth SSFDMA co-existing in a switch matrix that is highly reconfigurable, all operating within one channel.

The above discussion of the state-of-the-art in satellite switching technology involves the provision of beam-to-beam connectivity in an efficient manner. All the techniques developed so far provide communication paths for users within a channel, either in the time domain via SSTDMA traffic bursts or in the frequency domain via SSFDMA sub-channels within the channel. The channel bandwidth of a typical satellite varies from about 36 MHz to about 80 MHz in most satellites, whereas the available frequency spectrum for FSS (fixed satellite services) satellite communications is allocated in bandwidths of 250 MHz, 500 MHz or sometimes 1000 MHz segments. Complete band-to-band connectivity has not yet been addressed in the prior art.

Early satellites used the C-band for communications. The uplink frequency band of the C-band is from 5.925 GHz to 6.425 GHz and the downlink is from 3.7 GHz to 4.2 GHz. INTELSAT VI includes an additional C-band segment from 5.80 GHz to 5.925 GHz and 3.625 GHz to 3.7 GHz. During the late 1970's, domestic Ku-band satellites were introduced to augment C-band satellites. These satellites operate from 14.0 GHz to 14.5 GHz for the uplink and 11.7 GHz to 12.2 GHz for the downlink in ITU Region 2 and 12.2 GHz and 12.75 GHz for the downlink in Regions 1 and 3. As the demand for satellite capacity grows, the availability of greater bandwidths for satellite communications will be considered. Planners are now contemplating on using the Ka-bands (30/20 GHz) in the ITU allocations for fixed satellite services in the future.

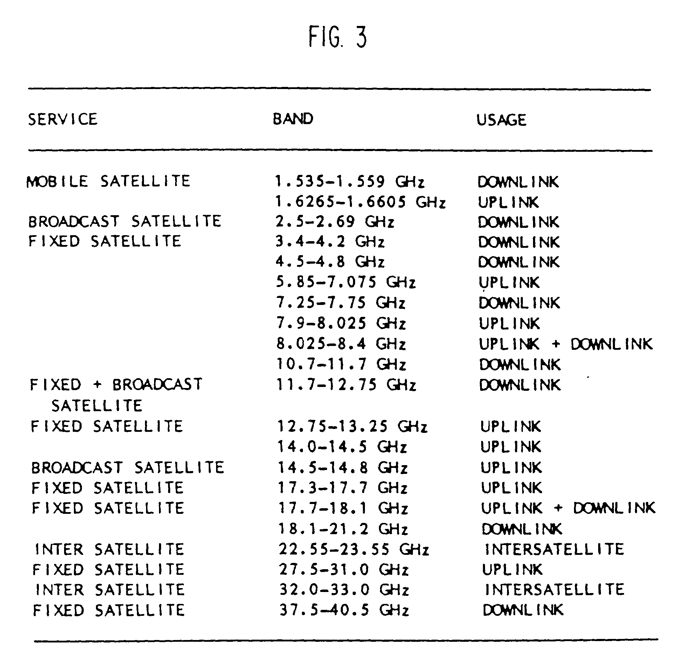

There are many uplink and downlink ITU band segments from the C-band though the Ku-band and even into the Ka-band allocated to satellite communications. Figure 3 illustrates some of the bands currently allocated to satellite communications by the ITU. Most domestic satellites operate in either the C-band or the Ku-band. A few carry multi-band payloads, and complete connectivity between the bands is usually not provided. INTELSAT began using dual band payloads on the INTELSAT V's in the early 1980's. A form of partial cross-connection between the bands was available on the INTELSAT V spacecraft. With the introduction of the INTELSAT VA IBS spacecraft, the band-to-band cross connectivity was extended and made switchable in a somewhat restrictive manner. Not all the uplink bands and beams can be connected to all the downlink bands and beams, i.e., complete connectivity is not available. This lack of complete band-to-band as well as complete beam-to-beam connectivity has been a result of the need to provide reliable satellites and the need to minimize the payload complexity based on known payload architecture. Therefore, up to now, there has been no known simple way of providing complete band-to-band as well as complete beam-to-beam connectivity, though beam-to-beam connectivity is known from e.g., U.S. Patent 4,181,886.

A satellite operator with C-band, Ku-band and Ka-band payloads on board a multi-beam satellite, using known single interconnection techniques, must contend with severe band-to-band connectivity limitations, in addition to beam-to-beam connectivity limitations. There would be great utility in a satellite capable of universal connectivity between any two bands and between any two beams on a channel-by-channel basis. In addition, in order to be compatible with existing spacecraft, means should be available to provide (i) the SSTDMA switching function on a channel-by-channel and on a beam-by-beam selectable basis, (ii) a broadcast mode (i.e., 1 uplink spot beam to n downlink spot beams) and a beam combining mode (i.e., n uplink spot beams to 1 downlink spot beam) on a channel-by-channel and on a beam-by-beam selectable basis, and (iii) a payload architecture that is simple, efficient and compatible with the existing technologies in satellite signal interconnection systems.

No satellite signal interconnection system known to the inventors provides all of these features.

### SUMMARY OF THE INVENTION

Accordingly, it is an object of the present invention to provide an interconnection system for satellite signals in which complete band-to-band connectivity is possible.

It is a further object of the invention to provide an interconnection system for satellite signals in which complete beam-to-beam connectivity is made possible.

It is a further object of the invention to provide an interconnection system for satellite signals in which complete or partial channel-to-channel connectivity is made possible.

It is a further object of the invention to provide an interconnection system for satellite signal in which complete band-to-band and complete beam-to-beam connectivity and complete or partial channel-to-channel connectivity is made possible.

It is still further an object of the invention to solve the problems discussed above with respect to conventional satellite signal interconnection systems.

These objects are achieved by a satellite communication system according to independent claims 1 and 13. Preferred embodiments of the invention are indicated in the dependent claims.

The new interconnection system architecture combines the techniques of SSFDMA and matrix switching in a unique manner to simplify the overall design and to achieve the above-stated desired objectives. In the invention, a plurality of bands or channels are converted to a common frequency before matrix switching occurs in order to provide not only complete connectivity between beams within any frequency bands but also between beams of any channel within any band. The particular payload architecture disclosed is adaptable to communicate between any number and combination of uplink channels, uplink bands and uplink beams and any number and combination of downlink channels, downlink bands and downlink beams.

To solve the complete band-to-band connectivity problem, the SSFDMA technique is first used, not on a single channel, but on the entire band. Next, the complete band-to-band and beam-to-beam connectivity problem is solved by combining the results of the application of the SSFDMA techniques on a band-by-band basis with the use of the matrix switching technique. The band-to-band connectivity and the beam-to-beam connectivity are now both provided within the same switch matrix. Other features such as beam combining on the uplinks, broadcasting on the downlinks, and SSTDMA switching for selected channels can all be provided within the same switch matrix.

### BRIEF DESCRIPTION OF THE DRAWINGS

Figure 1 shows a conventional satellite signal interconnection system.

Figure 2 shows another conventional satellite signal interconnection system.

Figure 3 shows various bands currently allocated for satellite communication by the ITU.

Figure 4 shows an example of the complete band-to-band connectivity result provided by the invention.

Figure 5 shows an embodiment of the invention.

Figure 6 shows an implementation of a switch matrix of the invention to enable a signal summation/combination mode.

Figure 7 shows another implementation of a switch matrix of the invention to enable a broadcasting mode.

Figure 8 shows yet another implementation of a switch matrix of the invention to enable use of TDMA techniques.

### DETAILED DESCRIPTION OF THE PREFERRED EMBODIMENTS

This invention solves all of the above problems by combining some of the existing concepts into a new and simple payload architecture to provide complete band-to-band as well as complete beam-to-beam and complete or partial channel-to-channel connectivity. As a result, this new payload architecture will be compatible with previous satellite payloads by offering all of the features now available on satellites in use today and it will offer additional new features that beforehand had not been available on existing or planned satellites. It should be pointed out that all previously known switching concepts and techniques have not addressed the problem of complete band-to-band connectivity. Previous techniques relating to beam-to-beam connectivity within a channel will be complementary to this invention, whereas this invention addresses the provision of complete band-to-band connectivity as well as complete beam-to-beam connectivity.

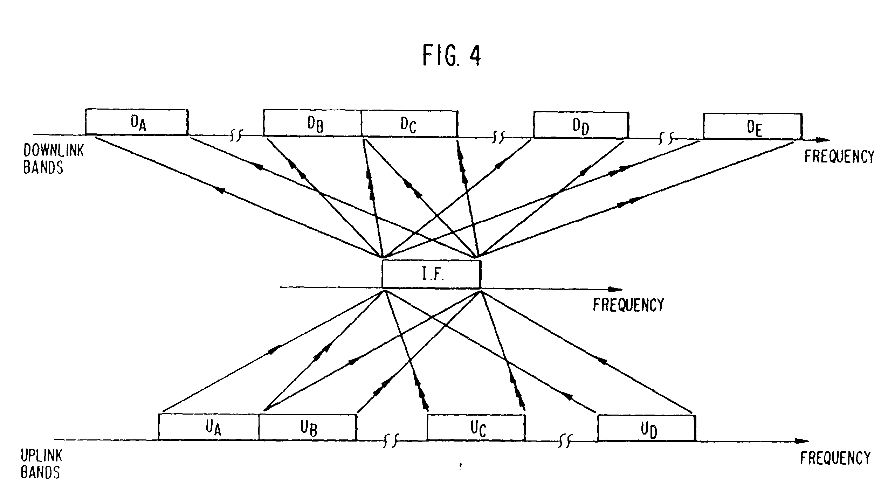

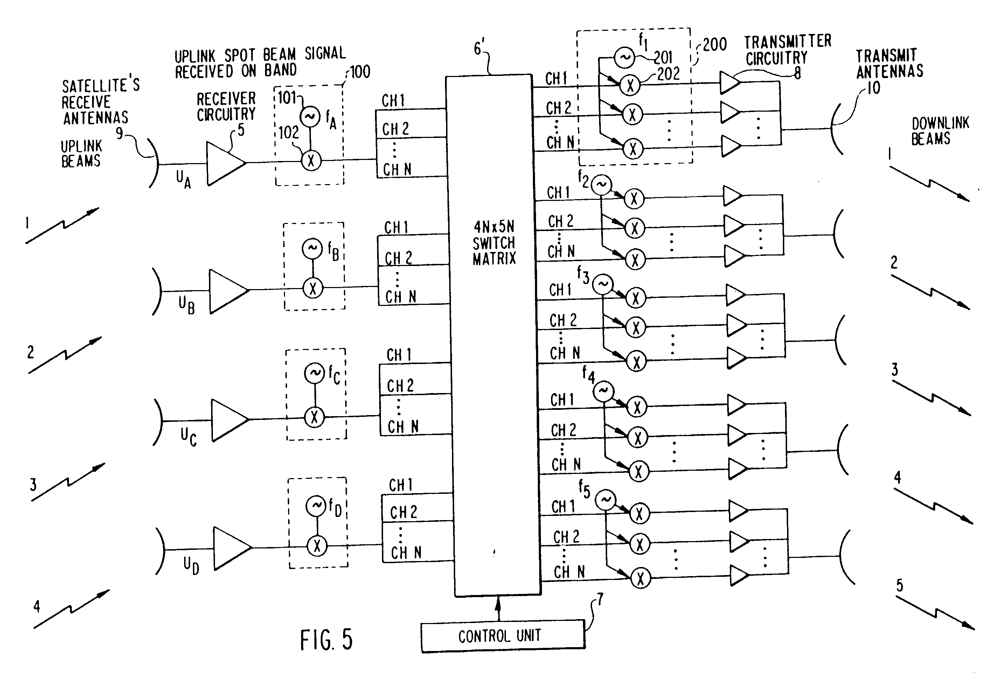

Figures 4 and 5 together describe the basic concepts used in this new payload architecture. The desired result, i.e., complete band-to-band connectivity is shown in Figure 4. As shown in Figure 4, four uplink bands U_{A}, U_{B}, U_{C} and U_{D} in the Ku-band (i.e., between 14 and 14.8 GHz) are shown communicating with five downlink bands D_{A}, D_{B}, D_{C}, D_{D} and D_{E} also in the Ku-band (i.e., between 10.95 and 12.75 GHz). Uplink beams from all of the four uplink bands are converted to a lower frequency in the C-band (i.e., 3.7 to 3.95 GHz). This frequency transformation draws on techniques used in SSFDMA. However, in conventional SSFDMA a plurality of sub-channels within a channel are converted to a common frequency before matrix switching occurs in order to provide complete connectivity between beams within a channel of a particular band.

Figure 5 shows one embodiment of a circuit for implementing the satellite payload architecture of the present invention. Circuit components which also are included in the conventional systems of Figures 1 and 2 are labeled with the same reference numerals as those used in Figures 1 and 2. A major difference between the circuit of Figure 5 and that of Figures 1 and 2 is that in Figures 1 and 2 the input uplink beams are all of the same band. Therefore, the circuit of Figures 1 and 2 provides complete connectivity between the beams within a band. In the circuit of Figure 5, however, the input uplink beams come from four different bands. Therefore, the circuit of Figure 5 allows for complete connectivity among four different uplink bands and five different downlink bands. Although the displayed embodiment shows complete connectivity between various bands in the Ku-band, the circuit is easily adaptable to handle complete interconnections between any bands including the C-band, the Ku-band and the Ka-band.

The circuit of Figure 5 will now be described in detail. Uplink beams 1-4 from any band available for satellite communications are input to receive antennas 9 and receiver circuitry 5. Next, each uplink input signal is sent to a frequency down converter section 100 having a multiplier 102 and a fixed frequency oscillator 101. Each input signal is sent as an input to a multiplier 102 with the other multiplier input being provided by a fixed frequency oscillator 101. All frequencies f_{A}-f_{D} of the fixed frequency oscillators 101 are set to be in the same frequency band, preferably in the C-band. In this way, the output of each of the frequency down converter sections 100 is a signal in the same frequency band. This frequency transformation must occur because all of the inputs to a switch matrix must be of the same frequency band in order for a conventional switch matrix to be used. While experience has shown that down-converting to a common bandwidth is preferred, it is within the contemplation of the invention to provide a system in which up-conversion to a common frequency bandwidth is provided.

The signals are then divided according to the desired number N of channels, each channel having a bandwidth which is a segment of the bandwidth of the total band of the frequency-transformed uplink signal. If so desired, the N channels referred to above may be further transformed to a second common frequency, as is well known in SSFDMA, so as to permit channel-to-channel connectivity.

The switch matrix 6', then, forms interconnections in a well-known manner between the 4N inputs and the 5N outputs, i.e., by receiving ground commands via the control unit 7' to control the on/off switch states of the various possible input/output connection paths.

Each N of the 5N switch matrix 6' outputs is next fed to a frequency up-converter section 200 having a fixed frequency oscillator 201 and N multipliers 202.

An output of the fixed frequency oscillator 201 of each frequency up-converter section 200 is applied as an additional input to each of the N multipliers. The signal output from each of the N multipliers is thus elevated in frequency up to a desired downlink band frequency and sent to the satellite's transmitter circuitry 8 and on to the satellite's transmitter antenna 10 for transmission as a downlink beam.

Of course, if the up-conversion alternative on the input side of switch matrix 6' is performed, down-conversion rather than up-conversion, should be performed, prior to transmission as downlink beams.

It can be observed that complete connectivity is now achieved for all the bands and for all the beams. Figure 5 shows that the switching is performed for all channels in all bands in one switch matrix. In practice, this switch matrix may become too large if all the channels from all the beams are switched within a single switch matrix.

Alternatively, the circuit of Figure 5 can be altered so that N different switch matrices are used instead of only one. Each switch matrix can be arranged to handle only the switching of each of the channels within the applicable bands. For example, switch matrix number 1 (of N total switch matrices) provides switching among all of the channel 1 signals in all of the bands. If so desired, the dimensions of the switch matrices can be enlarged so as to provide additional input and output ports which can be used in combination with channel-to-channel frequency translaters located between the additional output ports of one switch matrix and the additional input ports of another switch matrix to permit channel-to-channel connectivity. For example, a switch matrix corresponding to channel 1 (of N channels) may be provided with an additional output port and a switch matrix corresponding to channel 2 may be provided with an additional input port. A frequency translater, which translates the channel 1 signal output from the channel 1 switch matrix to a frequency corresponding to the channel 2 frequency, is inserted between the channel 1 switch matrix additional output port and the channel 2 switch matrix additional input port in this example. In this way, connectivity between channels 1 and 2 has been accomplished. Complete or partial channel-to-channel connectivity may be provided as desired by including the appropriate additional input and output ports and the appropriate frequency translaters between the appropriate switch matrices.

Also, it is possible to further modify the arrangement of Figure 5 so that an uplink beam is down-converted and divided into channels as described above, but is not input to a switch matrix. For example, some channels served by global coverage beams do not need to be switched since global beam coverage guarantees that each user can communicate with every other user using the same beam.

The above description shows that complete band-to-band connectivity and complete beam-to-beam connectivity are available from this new payload architecture. The following describes other features that are also available in this payload design.

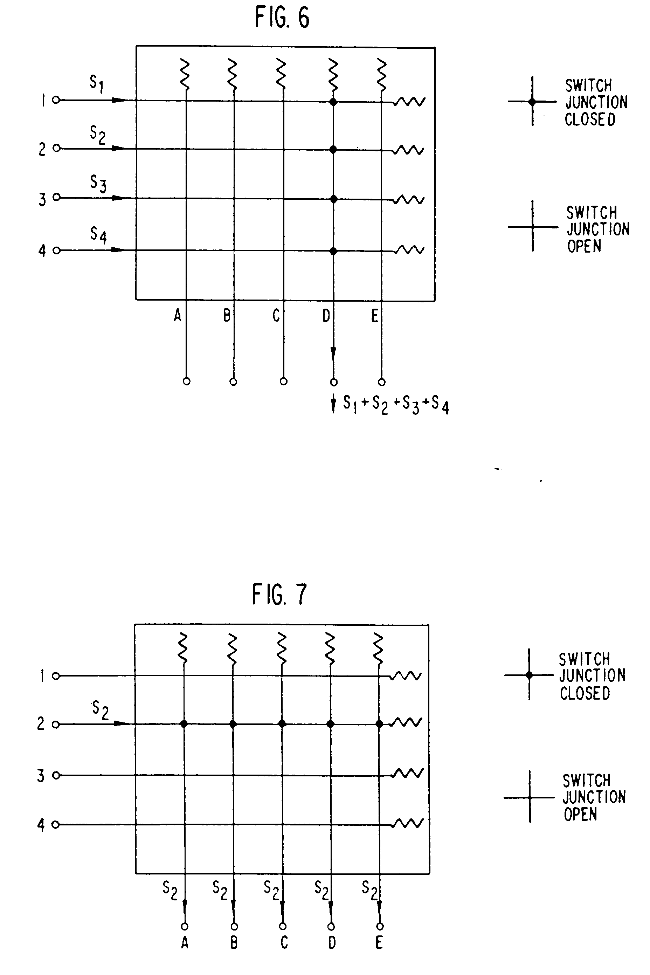

For coupler type cross-bar switch matrices (as disclosed in the Muratani et al. and Prather et al. publications) uplink beam combining and downlink broadcasting modes are available. These two modes as provided in the present invention are illustrated in Figures 6 and 7 respectively.

The uplink beam combining mode is shown in Figure 6. Four input uplink signals S₁ through S₄ are shown input to a switch matrix along four separate horizontal matrix input lines 1 through 4. Each of the horizontal input lines enters a closed switch junction (indicated by a black dot) which are lined up vertically along vertical output line D. Thus, a combined signal made up of the four input signals S₁ through S₄ is output along matrix output line D.

The downlink broadcast mode is shown in Figure 7. One input uplink signal S₂ is input to a switch matrix along horizontal matrix input line 2. Horizontal matrix input line 2 intersects five vertical matrix output lines at closed junctions. Thus, signal S₂ is connected to five vertical matrix output lines A through E and the signal S₂ is "broadcast" as downlink beams via the five matrix output lines.

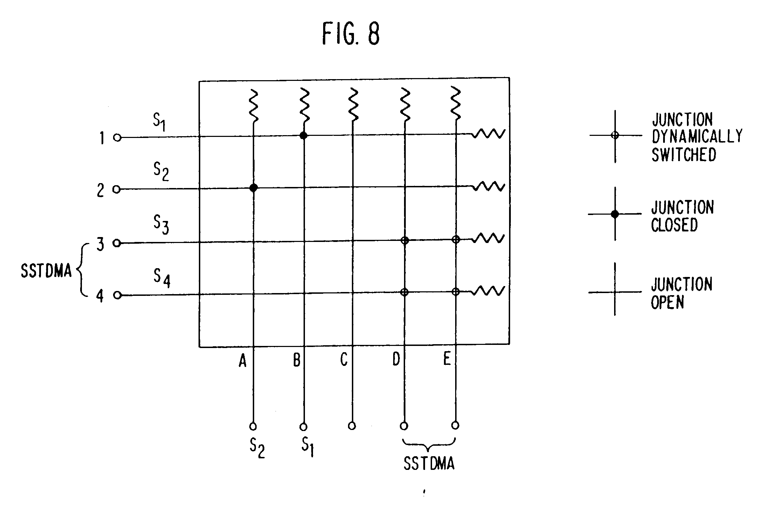

The present invention applies this type of cross-bar switch matrix in a payload architecture to derive the benefit of the beam combining (or signal summation) mode and the broadcast mode. Once this type of switch matrix is used, the switch can be partitioned into areas that provide different modes of operation. For example, part of the switch could be providing the combining or summation mode (N-to-one), part of the switch could be providing the broadcast mode (one-to-N), part of the switch could be providing combined summation and broadcasting (n-to-M), and part of the switch could be providing direct one-to-one connections as shown in Figure 5. A further embodiment is to partition the matrix switch in such a way that a portion of the switch would provide the SSTDMA switching functions for a number of selected beams and channels. An example of this SSTDMA type of operation using a switch matrix is shown in Figure 8.

In Figure 8, horizontal matrix input lines 3 and 4 are shown connected to vertical matrix output lines D and E by dynamically switched junctions. Therefore, at one point in time, uplink signal S₃ input along matrix input line 3 is connected to matrix output line D, and at a later point in time, uplink signal S₄ input along matrix input line 4 is connected to matrix output line D, thus providing the SSTDMA operation.

It should be noted that the switch control would be somewhat simpler if SSTDMA were not used. It can be decided at the planning stage how many channels would need to be equipped with the SSTDMA capability, i.e., not all switch matrices need to have the complete control and timing functions needed by the SSTDMA.

It also should be pointed out that the above-described mixed combining/summation, broadcasting and SSTDMA modes of operation have never before been available together on any known spacecraft. Neither has this mixed mode been made available together with complete band-to-band connectivity either as a proposal or in an actual spacecraft.

This new payload architecture is not limited to using the coupler type of RF switch matrices. For example, if on-board demodulation and signal processing are incorporated into the payload, this new payload architecture can make use of baseband digital switching techniques to achieve the same objectives, i.e., the RF switch matrix could be replaced by an equivalent baseband switch matrix with the attendant advantage of not degrading the G/T of the spacecraft when the switch provides the beam combining or signal summation function on the uplinks.

For satellites that employ dual orthogonal antenna polarizations, this new payload architecture would treat the orthogonal polarization of each beam as a separate beam and process the signal accordingly without difficulty, i.e., this new payload architecture is compatible with dual polarized satellites as well.

Other advantages of the payload architecture of the invention will now be described. First, it should be noted that all of the connectivity switching is performed at low power levels in a switch in such a way that the G/T of the spacecraft is not significantly affected.

Second, apart from redundancy switching for the high power transmitter amplifiers, no "output" high power switching is needed after high power amplification prior to antenna transmission in the downlink. The elimination of loss in output switches which are not required for basic redundancy yields the highest possible efficiency for a given d.c. power requirement and reduces RF path loss equalization requirements.

Third, the high power transmitters (usually TWTA's or SSPA's) can be optimized for each of the downlink bands rather than for more than one downlink band at a time, as would be the case if other types of on-board switching architecture are used. This calls for transmitter ring redundancy arrangements to be based on smaller rings rather than one large ring encompassing all of the transmitters. This is not a disadvantage in view of the fact that the band-to-band frequency separations can be quite large for a multi-band payload using the C-bands, the Ku-bands and the Ka-bands, etc.

Due to the simplicity of this new payload architecture and the use of proven technology in the RF switch matrices, all the desirable features such as complete connectivity between all bands and all beams, completely flexible combining and broadcasting modes, and the retention of the SSTDMA option for selectable beams and channels are achievable with high reliability and availability.

The present invention has been described with respect to satellite communications signals. However, the invention also has applicability to ground-to-ground communications systems, such as microwave cellular radio systems.

The scope of the invention is not to be limited by the above-described embodiments. Rather, the following claims define the scope of the invention.

## Claims

1. A satellite communication system for providing complete connectivity between input signals within at least one band of frequencies and output signals within a plurality of bands of frequencies, said bands in said plurality of bands of frequencies being different from each other, said system comprising a satellite which includes:
input signal receiving means (5,9), having an output, for receiving said input signals;
first frequency converting means (100) connected to the output of said input signal receiving means for converting the frequencies of said input signals to produce first frequency-converted signals all of which are within a common band of frequencies;
switching means (6') for receiving said first frequency-converted signals as inputs thereto and for interconnecting said first frequency-converted signals to pre-selected outputs based on desired transmission paths;
second frequency converting means (200) for receiving said first frequency-converted signals from said switching means and for converting the frequencies of said first frequency-converted signals to produce second frequency-converted signals within said plurality of bands of frequencies; and
output signal producing means (8,10) for receiving said second frequency-converted signals as said output signals and for transmitting them, such that, irrespective of relationship between said least one band of frequencies and said plurality of bands of frequencies, said system provides complete connectivity between said input signals within at least one band of frequencies and said output signals within said plurality of bands of frequencies.

2. A system as claimed in claim 1 in which frequency bandwidths of said second frequency-converted signals correspond to said desired transmission paths.

3. A system as claimed in claim 1 in which said second frequency converting means converts the frequency of said first frequency-converted signals to said plurality of bands of frequencies.

4. A system as claimed in claim 1 in which said switching means is a microwave switch matrix (6').

5. A system as claimed in claim 4 further comprising a control means (7) for controlling the switching of the microwave switch matrix.

6. A system according to claim 1, wherein said first frequency-converting means comprises down-converting means (101,102) for down-converting the frequencies of said input signals to said common band of frequencies.

7. A system according to claim 6, wherein said second frequency-converting means comprises up-converting means (201,202) for up-converting the frequencies of said first frequency-converted signals to frequencies of said output signals.

8. A system according to claim 1 in which the outputs of said first frequency converting means are divided into an integer number N of channels and each of said N channels is input to said switching means.

9. A system according to claim 8 further in which signals of each of said N channels are frequency translated to a common frequency and the thus-frequency translated signals are input to said switching means, thus allowing complete channel-to-channel connectivity.

10. A system according to claim 8 in which said switching means comprises N switch matrices, one for each of said N channels, and each one of the N switch matrices receives signals of a corresponding one of the N channels.

11. A system according to claim 10 in which at least two of said N switch matrices are provided with at least one additional input port and one additional output port and further in which a frequency translater means is provided between each such additional output port of any one of the N switch matrices and the additional input port of another of the N switch matrices so as to provide channel-to-channel connectivity.

12. A system as claimed in claim 1 wherein said satellite communication system further comprises associated ground communication stations for transmission and reception of communication signals.

13. A satellite communication system for providing complete connectivity between input signals within a plurality of bands of frequencies, said bands in said plurality of bands of frequencies being different from each other, and output signals within at least one band of frequencies, said system comprising a satellite which includes:
input signal receiving means (5,9), having an output, for receiving said input signals;
first frequency converting means (100), having an input connected to the output of said input signal receiving means, for converting the frequencies of said input signals to produce first frequency-converted signals all of which are within a common band of frequencies;
switching means (6') for receiving said first frequency-converted signals as inputs thereto and for interconnecting said first frequency-converted signals to pre-selected outputs based on desired transmission paths;
second frequency converting means (200) for receiving said first frequency-converted signals from said switching means and for converting the frequencies of said first frequency-converted signals to produce second frequency-converted signals within said at least one band of frequencies; and
output signal producing means (8,10) for receiving said second frequency-converted signals as said output signals and for transmitting them, such that, irrespective of relationship between said plurality of bands of frequencies and said at least one band of frequencies, said system provides complete connectivity between said input signals within said plurality of bands of frequencies and said output signals within at least one band of frequencies.

## Patentansprüche

1. Satellitenkommunikationssystem zur Bereitstellung einer vollständigen Verbindungsfähigkeit zwischen Eingangssignalen innerhalb zumindest eines Frequenzbandes und Ausgangssignalen innerhalb mehrerer Frequenzbänder, wobei die Bänder in den mehreren Frequenzbändern sich voneinander unterscheiden, und das System einen Satelliten aufweist, welcher enthält:
eine Eingangssignalempfangsvorrichtung (5, 9), welche einen Ausgang aufweist, zum Empfang der Eingangssignale;
eine erste Frequenzwandlervorrichtung (100), die an den Ausgang der Eingangssignalempfangsvorrichtung angeschlossen ist, um die Frequenzen der Eingangssignale zur Erzeugung erster frequenzgewandelter Signale umzuwandeln, die sämtlich innerhalb eines gemeinsamen Frequenzbandes liegen;
eine Schaltvorrichtung (6') zum Empfang der ersten frequenzgewandelten Signale als Eingangsgrößen und zur gegenseitigen Verbindung der ersten frequenzgewandelten Signale mit vorausgewählten Ausgängen auf der Grundlage gewünschter Übertragungspfade;
eine zweite Frequenzwandlervorrichtung (200) zum Empfang der ersten frequenzgewandelten Signale von der Schaltvorrichtung und zur Umwandlung der Frequenzen der ersten frequenzgewandelten Signale zur Erzeugung zweiter frequenzgewandelter Signale innerhalb der mehreren Frequenzbänder; und
eine Ausgangssignalerzeugungsvorrichtung (8, 10) zum Empfang der zweiten frequenzgewandelten Signale als die Ausgangssignale und zu deren Aussendung, so daß unabhängig von der Beziehung zwischen dem zumindest einen Frequenzband und den mehreren Frequenzbändern das System eine vollständige Verbindungsfähigkeit zwischen den Eingangssignalen innerhalb zumindest eines Frequenzbandes und den Ausgangssignalen innerhalb der mehreren Frequenzbänder zur Verfügung stellt.

2. System nach Anspruch 1, bei welchem Frequenzbandbreiten der zweiten frequenzgewandelten Signale den gewünschten Übertragungspfaden entsprechen.

3. System nach Anspruch 1, bei welchem die zweite Frequenzwandlervorrichtung die Frequenz der ersten frequenzgewandelten Signale in die mehreren Frequenzbänder umwandelt.

4. System nach Anspruch 1, bei welchem die Schaltvorrichtung eine Mikrowellenschaltmatrix (6') ist.

5. System nach Anspruch 4, bei welchem weiterhin eine Steuervorrichtung (7) zum Steuern der Umschaltung der Mikrowellenschaltmatrix vorgesehen ist.

6. System nach Anspruch 1, bei welchem die erste Frequenzwandlervorrichtung eine Herunterwandlervorrichtung (101, 102) zum Herunterwandeln der Frequenzen der Eingangssignale auf das gemeinsame Frequenzband aufweist.

7. System nach Anspruch 6, bei welchem die zweite Frequenzwandlervorrichtung eine Aufwärtswandlervorrichtung (201, 202) zum Heraufwandeln der Frequenzen der ersten frequenzgewandelten Signale in Frequenzen der Ausgangssignale aufweist.

8. System nach Anspruch 1, bei welchem die Ausgänge der ersten Frequenzwandlervorrichtung in eine ganzzahlige Anzahl N von Kanälen unterteilt sind, und jeder der N Kanäle in die Schaltvorrichtung eingegeben wird.

9. System nach Anspruch 8, bei welchem weiterhin Signale jedes der N Kanäle auf eine gemeinsame Frequenz frequenzgewandelt werden, und die auf diese Weise frequenzgewandelten Signale in die Schaltvorrichtung eingegeben werden, wodurch eine vollständige Verbindungsfähigkeit von Kanal zu Kanal ermöglicht wird.

10. System nach Anspruch 8, bei welchem die Schaltvorrichtung N Schaltmatrizen aufweist, eine für jeden der N Kanäle, und jede der N Schaltmatrizen Signale von einem entsprechenden der N Kanäle empfängt.

11. System nach Anspruch 10, bei welchem zumindest zwei der N Schaltmatrizen mit zumindest einem zusätzlichen Eingangsport und einem zusätzlichen Ausgangsport versehen sind, und weiterhin eine Frequenzwandlervorrichtung zwischen jedem derartigen zusätzlichen Ausgangsport einer der N Schaltmatrizen und dem zusätzlichen Eingangsport einer der N Schaltmatrizen vorgesehen ist, um so eine Verbindungsfähigkeit von Kanal zu Kanal zur Verfügung zu stellen.

12. System nach Anspruch 1, bei welchem das Satellitenkommunikationssystem weiterhin zugeordnete Erdkommunikationsstationen zum Aussenden und Empfangen von Kommunikationssignalen aufweist.

13. Satellitenkommunikationssystem zur Bereitstellung einer vollständigen Verbindungsfähigkeit zwischen Eingangssignalen innerhalb mehrerer Frequenzbänder, wobei sich die Bänder in den mehreren Frequenzbändern voneinander unterscheiden, und Ausgangssignalen innerhalb zumindest eines Frequenzbandes, wobei das System einen Satelliten aufweist, welcher enthält:
eine mit einem Ausgang versehene Eingangssignalempfangsvorrichtung (5, 9) zum Empfang der Eingangssignale;
eine erste Frequenzwandlervorrichtung (100), die einen Eingang aufweist, der an den Ausgang der Eingangssignalempfangsvorrichtung angeschlossen ist, zur Umwandlung der Frequenzen der Eingangssignale zur Erzeugung erster frequenzgewandelter Signale, die sämtlich innerhalb eines gemeinsamen Frequenzbandes liegen;
eine Schaltvorrichtung (6') zum Empfang der ersten frequenzgewandelten Signale als Eingangsgrößen und zur gegenseitigen Verbindung der ersten frequenzgewandelten Signale mit vorausgewählten Ausgängen auf der Grundlage gewünschter Übertragungspfade;
eine zweite Frequenzwandlervorrichtung (200) zum Empfang der ersten frequenzgewandelten Signale von der Schaltvorrichtung und zur Umwandlung der Frequenzen der ersten frequenzgewandelten Signale zur Erzeugung zweiter frequenzgewandelter Signale innerhalb des zumindest einen Frequenzbandes; und
eine Ausgangssignalerzeugungsvorrichtung (8, 10) zum Empfang der zweiten frequenzgewandelten Signale als die Ausgangssignale und zu deren Aussendung, so daß unabhängig von der Beziehung zwischen den mehreren Frequenzbändern und dem zumindest einen Frequenzband das System einevollständige Verbindungsfähigkeit zwischen den Eingangssignalen innerhalb der mehreren Frequenzbänder und den Ausgangssignalen innerhalb des zumindest einen Frequenzbandes zur Verfügung stellt.

## Revendications

1. Système de communication satellite pour fournir une capacité de connexion totale entre des signaux d'entrée situés dans au moins une bande de fréquence et des signaux de sortie situés dans une pluralité de bandes de fréquence, lesdites bandes dans ladite pluralité de bandes de fréquence étant différentes les unes des autres, ledit système comprenant un satellite qui comprend :
des moyens de réception de signal d'entrée (5, 9), ayant une sortie, pour recevoir lesdits signaux d'entrée;
des premiers moyens convertisseurs de fréquence (100) connectés à la sortie desdits moyens des réception de signal d'entrée pour convertir les fréquences desdits signaux d'entrée pour produire les premiers signaux de fréquence convertie qui sont tous à l'intérieur d'une bande de fréquence commune ;
des moyens de commutation (6') pour recevoir lesdits premiers signaux de fréquence convertie en tant qu'entrée et pour interconnecter lesdits premiers signaux de fréquence convertie avec des sorties présélectionnées basées sur les chemins de transmission désirés ;
des seconds moyens convertisseurs de fréquence (200) pour recevoir lesdits premiers signaux de fréquence convertie à partir desdits moyens de commutation et pour convertir les fréquences desdits premiers signaux de fréquence convertie pour produire des seconds signaux de fréquence convertie situés dans ladite pluralité de bandes de fréquence ; et
des moyens de production de signal de sortie (8, 10) pour recevoir lesdits seconds signaux de fréquence convertie en tant que lesdits signaux de sortie et pour les transmettre de telle sorte qu'indépendamment de la relation entre ladite au moins une bande de fréquence et ladite pluralité de bandes de fréquence, ledit système fournit une capacité de connexion totale entre lesdits signaux d'entrée situés dans ladite au moins une bande de fréquence et lesdits signaux de sortie situés dans ladite pluralité de bandes de fréquence.

2. Système selon la revendication 1, dans lequel les largeurs de bandes de fréquence desdits seconds signaux de fréquence convertie correspondent auxdits chemins de transmission désirés.

3. Système selon la revendication 1, dans lequel lesdits seconds moyens convertisseurs de fréquence convertissent la fréquence desdits premiers signaux de fréquence convertie vers ladite pluralité de bandes de fréquence.

4. Système selon la revendication 1, dans lequel lesdits moyens de commutation sont constitués d'une matrice de commutation micro-onde (6').

5. Système selon la revendication 4, comprenant en outre des moyens de commande (7) pour commander la commutation de la matrice de commutation micro-onde.

6. Système selon la revendication 1, dans lequel lesdits premiers moyens convertisseurs de fréquence comprennent des moyens démultiplicateurs (101, 102) pour démultiplier les fréquences desdits signaux d'entrée vers ladite bande de fréquence commune.

7. Système selon la revendication 6, dans lequel lesdits second moyens convertisseurs de fréquence comprennent des moyens multiplicateurs (201, 202) pour multiplier les fréquences desdits premiers signaux de fréquence convertie vers les fréquences desdits signaux de sortie.

8. Système selon la revendication 1, dans lequel les sorties desdits premiers moyens convertisseurs de fréquence sont divisées en un nombre entier n de canaux et chacun desdits n canaux est envoyé dans lesdits moyens de commutation.

9. Système selon la revendication 8, dans lequel en outre des signaux de chacun desdits n canaux sont décalés en fréquence sur une fréquence commune et les signaux ainsi décalés en fréquence sont envoyés dans lesdits moyens de commutation, permettant ainsi une capacité de connexion totale canal à canal.

10. Système selon la revendication 8, dans lequel lesdits moyens de commutation comprennent n matrices de commutation, une pour chacun desdits n canaux, et chacune desdites n matrices de commutation reçoit des signaux d'un canal correspondant desdits n canaux.

11. Système selon la revendication 10, dans lequel au moins deux desdites n matrices de commutation sont pourvues avec au moins un port d'entrée additionnel et au moins un port de sortie additionnel et en outre dans lequel les moyens de décalage en fréquence sont prévus entre chacun desdits ports de sortie additionnels de l'une quelconque desdites n matrices de commutation et desdits ports d'entrée additionnel d'une autre desdites n matrices de commutation de telle manière à fournir une capacité de connexion canal à canal.

12. Système selon la revendication 1, dans lequel ledit système de communication satellite comprend en outre des stations de communication au sol associées pour une transmission et une réception de signaux de communication.

13. Système de communication satellite pour fournir une capacité de connexion totale entre des signaux d'entrée situés dans une pluralité de bandes de fréquence, lesdites bandes dans ladite pluralité de bandes de fréquence étant différentes les unes des autres, et des signaux de sortie situés dans au moins une bande de fréquence, ledit système comprenant un satellitte qui comprend :
des moyens de réception de signal d'entrée (5, 9), ayant une sortie, pour recevoir lesdits signaux d'entrée;
des premiers moyens convertisseurs de fréquence (100) ayant une entrée connectée à la sortie desdits moyens des réception de signal d'entrée pour convertir les fréquences desdits signaux d'entrée pour produire les premiers signaux de fréquence convertie qui sont tous à l'intérieur d'une bande de fréquence commune ;
des moyens de commutation (6') pour recevoir lesdits premiers signaux de fréquence convertie en tant qu'entrée et pour interconnecter lesdits premiers signaux de fréquence convertie avec des sorties présélectionnées basées sur les chemins de transmission désirés ;
des seconds moyens convertisseurs de fréquence (200) pour recevoir lesdits premiers signaux de fréquence convertie à partir desdits moyens de commutation et pour convertir les fréquences desdits premiers signaux de fréquence convertie pour produire des seconds signaux de fréquence convertie situés dans ladite au moins une bande de fréquence ; et
des moyens de production de signal de sortie (8, 10) pour recevoir lesdits seconds signaux de fréquence convertie en tant que lesdits signaux de sortie et pour les transmettre de telle sorte qu'indépendamment de la relation entre ladite pluralité de bandes de fréquence et ladite au moins une bande de fréquence, ledit système fournit une capacité de connexion totale entre lesdits signaux d'entrée situés dans ladite pluralité de bandes de fréquence et lesdits signaux de sortie situés dans ladite au moins une bande de fréquence.
